# EUROPEAN PATENT APPLICATION

(11) **EP 1 734 738 A2**
(43) Date of publication of application: **20.12.2006**
(21) Application number: 06251296.7
(22) Date of filing: 10.03.2006
(51) Int. Cl.: H04N 1/41, H04N 7/26

(54) **Image encoding and decoding method and apparatus, and computer-readable recording medium storing program for executing the method**

(30) Priority: 11.06.2005 KR 20050050143
(71) Applicant: Samsung Electronics Co., Ltd., Suwon-si, Gyeonggi-Do (KR)
(72) Inventor: Kim, So-young, Yongin-si Gyeonggi-do (KR); Park, Jeong-hoon, Seoul (KR); Lee, Sang-rae 248-806 Hwanggol Maeul 2-danji, Suwon-si Gyeonggi-do (KR); Sohn, Yu-mi 503-1005 Topmaeul Ssangyong Apt., Seongnam-si Gyeonggi-do (KR)
(74) Representative: Brandon, Paul Laurence

(57) **Abstract**

A method of dividing an input image into a plurality of one-dimensional images, each including a plurality of pixels having similar characteristics, and encoding the input image in units of one-dimensional images to enhance encoding efficiency. The image encoding method includes: dividing an input image into a plurality of one-dimensional codes, each including at least one pixel selected according to pixel characteristics; creating a plurality of one-dimensional code information, each comprising information regarding the at least one pixel included in each of the one-dimensional codes; and encoding the one-dimensional code information in units of one-dimensional codes.

## Description

The present invention relates to encoding and decoding apparatus and methods as well as to computer readable recording media for executing such methods.

Due to limitations in storing or transmitting large-volume digital video data, diverse conventional video compression techniques or standards are used, including UTEG-1, MPEG-2, and H.264. These conventional video compression techniques utilize similarities between successive frames or redundancies within a current frame to encode an image in units of macroblocks. Moreover, these conventional video compression techniques adopt a lossy coding process, such as quantization, to improve compression rates.

U.S. Patent No. 5,995,670 discloses a method of encoding or compressing contours using chain codes. However, digital video services being offered now require an encoding method that provides a level of compression and image quality that cannot be achieved using conventional encoding methods.

Preferred embodiment of the present invention aim to provide an image encoding apparatus and method that divide an input image into a plurality of one-dimensional images selected according to pixel characteristics and encode the input image in units of the one-dimensional images to enhance encoding efficiency, and an apparatus and method for decoding the encoded image.

According to an aspect of the present invention, there is provided an image encoding method including: dividing an input image into a plurality of one-dimensional codes, each including at least one pixel selected according to pixel characteristics; creating a plurality of one-dimensional code information, each comprising information regarding the at least one pixel included in each of the one-dimensional codes; and encoding the one-dimensional code information in units of one-dimensional codes.

The at least one pixel included in each of the one-dimensional codes may have a characteristic value within a predetermined range and may be one-dimensionally connected to other pixels in each of the one-dimensional codes.

The one-dimensional code information may include position information and characteristic information of the at least one pixel included in each of the one-dimensional codes, and the encoding of the one-dimensional code information may include reconfiguring the characteristic information of the one-dimensional code information into a block of a predetermined size and performing at least one of image transformation and quantization on the block.

The division of the input image may include dividing the input image into the one-dimensional codes according to a plurality of modes and selecting the one-dimensional codes according to an optimal encoding efficiency mode, wherein the modes may have different ranges of characteristic values of the at least one pixel included in each of the one-dimensional codes or different starting points for searching for the at the least one the pixel included in each of the one-dimensional codes.

The characteristic information of the at least one pixel may be a luminance value or a color value if the input image has an YCbCr format and may be a color domain value if the input image has an RGB format.

The one-dimensional code information may include the characteristic information of the at least one pixel included in each of the one-dimensional codes, and encoding of the characteristic information may include calculating a difference between the characteristic information of the at least one pixel and encoding the difference.

The one-dimensional code information may include the position information of the at least one pixel included in each of the one-dimensional codes, and encoding of the position information may include encoding an index indicating a direction of the at least one pixel included in each of the one-dimensional codes.

The one-dimensional code information may include the position information of the at least one pixel included in each of the one-dimensional codes, and encoding of the position information may include generating a plurality of code planes classified according to the one-dimensional codes that each include the at least one pixel and encoding the code planes.

The code planes may include information indicating whether each of the at least one pixel belongs to a current code plane.

Each of the code planes may be generated by setting code information corresponding to pixels that belong to the current code plane to one and setting code information corresponding to pixels that do not belong to the current code plane to zero.

The code planes may be arranged in a predetermined order, information regarding a next code plane may be modified based on code information of a previous code plane, and the modified information regarding the next code plane may be encoded.

The modification of the information regarding the next code plane may include removing information regarding pixels that belong to the previous code plane from the information regarding the next code plane based on the code information of the previous code plane.

The division of the input image may include searching for the at least one pixel included in each of the one-dimensional codes, wherein the searching for the at least one pixel included in each of the one-dimensional codes may include selecting a pixel having a characteristic value closest to a characteristic value of a current pixel from pixels adjacent to the current pixel and storing the characteristic value and position information of the selected pixel.

Generation of a current one-dimensional code may be terminated when a difference between the characteristic value of the selected pixel and the characteristic value of the current pixel is greater than a predetermined threshold value.

The threshold value may be chosen according to characteristics of the input image.

The division of the input image may further include searching for the at least one pixel included in each of the one-dimensional codes, wherein the searching for the at least one pixel included in each of the one-dimensional codes may include generating a plurality of one-dimensional codes based on a plurality of pixels adjacent to a current pixel having characteristic values whose difference from a characteristic value of the current pixel falls within a predetermined range and selecting the adjacent pixels that form an optimum one-dimensional code out of the generated one-dimensional codes.

The division of the input image may further include configuring remaining pixels into a one-dimensional code when a number of the remaining pixels is less than a predetermined value and arranging the remaining pixels in a predetermined scanning order.

According to another aspect of the present invention, there is provided a computer-readable recording medium on which a program for executing an image encoding method is recorded, the method including: dividing an input image into a plurality of one-dimensional codes, each including at least one pixel selected according to pixel characteristics; creating a plurality of one-dimensional code information, each including information regarding the at least one pixel included in each of the one-dimensional codes; and encoding the one-dimensional code information in units of one-dimensional codes.

According to another aspect of the present invention, there is provided an image encoding apparatus including: an image division and one-dimensional code information generation unit which divides an input image into a plurality of one-dimensional codes, each comprising at least one pixel selected according to pixel characteristics, and creating a plurality of one-dimensional code information, each comprising information regarding the at least one pixel included in each of the one-dimensional codes; and an encoding unit which encodes the one-dimensional code information in units of one-dimensional codes.

According to another aspect of the present invention, there is provided an image decoding method including: variable-length-decoding image data which is divided into a plurality of one-dimensional codes according to pixel characteristics and then encoded; reconstructing one-dimensional code information which includes information regarding at least one pixel included in each of the one-dimensional codes, based on the variable-length-decoded image data; and reconfiguring an image based on the reconstructed one-dimensional code information.

According to another aspect of the present invention, there is provided a computer-readable recording medium on which a program for executing an image decoding method is recorded, the method including: variable-length-decoding image data divided into a plurality of one-dimensional codes according to pixel characteristics and then encoded; reconstructing one-dimensional code information which includes information regarding at least one pixel included in each of the one-dimensional codes, based on the variable-length-decoded image data; and reconfiguring an image based on the reconstructed one-dimensional code information.

According to another aspect of the present invention, there is provided an image decoding apparatus including: a variable-length-decoding (VLD) unit which variable-length-decodes image data which is divided into a plurality of one-dimensional codes according to pixel characteristics and then encoded; a one-dimensional code reconstruction unit which reconstructs one-dimensional code information including information regarding at least one pixel included in each of the one-dimensional codes, based on the variable-length-decoded image data; and an image reconfiguring unit which reconfigures an image based on the reconstructed one-dimensional code information.

The present invention will become more apparent by describing in detail exemplary embodiments thereof with reference to the attached drawings in which:
FIG. 1 is a block diagram of an image encoding apparatus according to an embodiment of the present invention;
FIGS. 2A through 2E illustrate steps involved in a process of searching for pixels to be included in each of one-dimensional codes in an 8x8 block according to an embodiment of the present invention;
FIG. 3 illustrates a step in a process of searching for pixels included in a one-dimensional code according to an embodiment of the present invention;
FIG. 4 illustrates a step in a process of searching for pixels included in a one-dimensional code according to an embodiment of the present invention;
FIG. 5 illustrates position information of pixels included in a one-dimensional code used for a method of encoding according to an embodiment of the present invention;
FIG. 6 is a view of a divided image according to an embodiment of the present invention;
FIG. 7 is a view of a divided image according to an embodiment of the present invention;
FIG. 8 is a block diagram of an encoding unit according to an embodiment of the present invention;
FIG. 9 is a block representation of luminance values included in a one-dimensional code according to an embodiment of the present invention;
FIG. 10 is a code table used for encoding position information of pixels included in each one-dimensional code according to an embodiment of the present invention;
FIGS. 11A through 11F illustrate identification values of pixels indicating which one-dimensional code each pixel belongs to and that are reconfigured per code plane according to an embodiment of the present invention;
FIGS. 12 A through 12E illustrate code planes for encoding one-dimensional code information according to an embodiment of the present invention;
FIG. 13 is a flowchart illustrating an encoding method according to an embodiment of the present invention;
FIG. 14 is a block diagram of a decoding apparatus according to an embodiment of the present invention; and
FIG. 15 is a flowchart illustrating a decoding method according to an embodiment of the present invention.

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

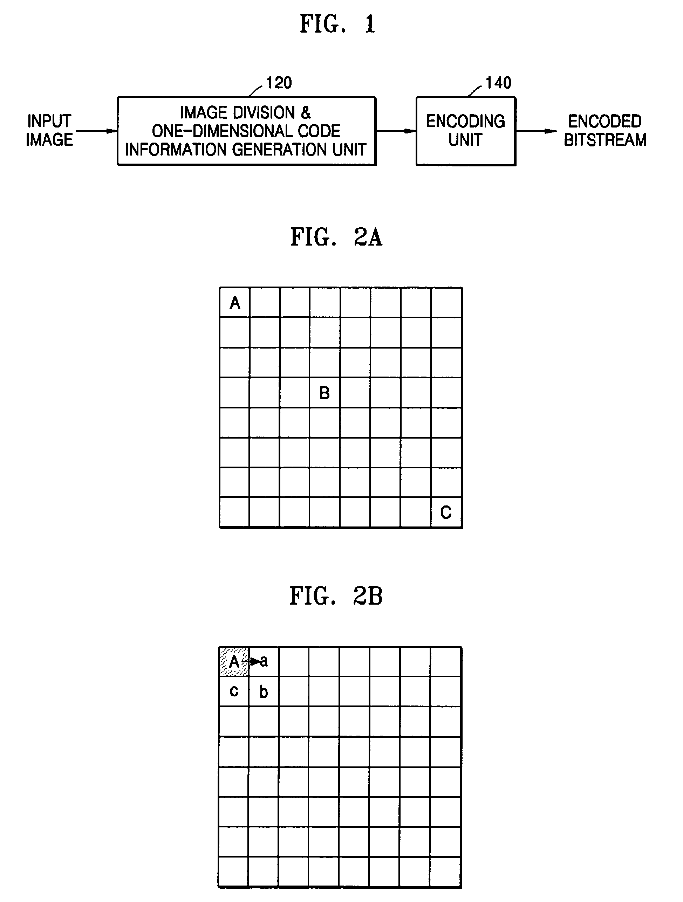

FIG. 1 is a block diagram of an image encoding apparatus according to an embodiment of the present invention. Referring to FIG. 1, the image encoding apparatus includes an image division and one-dimensional code information generation unit 120 and an encoding unit 140.

The image division and one-dimensional code information generation unit 120 divides an input image into a plurality of one-dimensional images of a predetermined size, for example, a picture or a macroblock, according to pixel characteristics. The input image may be divided into the one-dimensional images by extracting the contour of an object within a screen, selecting pixels in units of one-dimensional codes, or selecting pixels having brightness values within a predetermined range by using a threshold value.

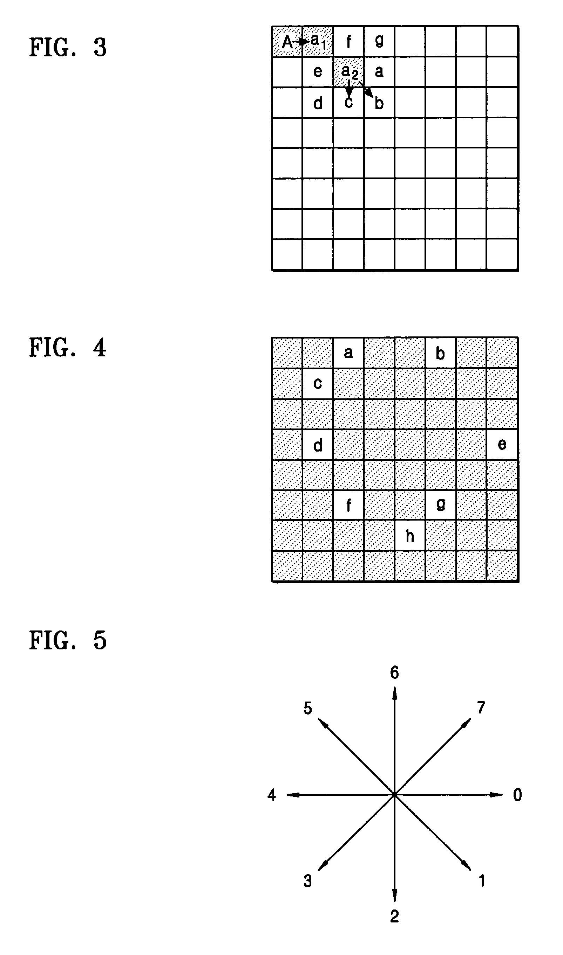

A method of forming a one-dimensional code according to pixel characteristics, that is, luminance values within a predetermined range will now be described with reference to FIGS. 2A-E and 3. For purposes of simplicity, in the present embodiment, luminance will be described as an example of pixel characteristics. However, embodiments of the present invention may also be applied to other pixel characteristics, for example, chrominance.

FIGS. 2A through 2E illustrate steps involved in a process of searching for pixels to be included in each of one-dimensional codes included in an 8x8 block according to an embodiment of the present invention. Pixels A, B, and C in FIG. 2A indicate start positions for searching for pixels to be included in one-dimensional codes. A search may start at any one of the pixels, i.e., start positions, A, B, and C. After a plurality of modes, that is, after a search is performed at a plurality of positions, a start position for searching for, for example, a one-dimensional code having a maximum number of pixels may be selected to form an optimum one-dimensional code. Alternatively, from among pixels having luminance values within a predetermined range, a pixel in the centremost position may be selected as the start position.

The plurality of modes are determined by varying a start position, a range of characteristic values included in a one-dimensional code, or a threshold value that determines a range of difference between a characteristic value of a current pixel and that of a next successive pixel.

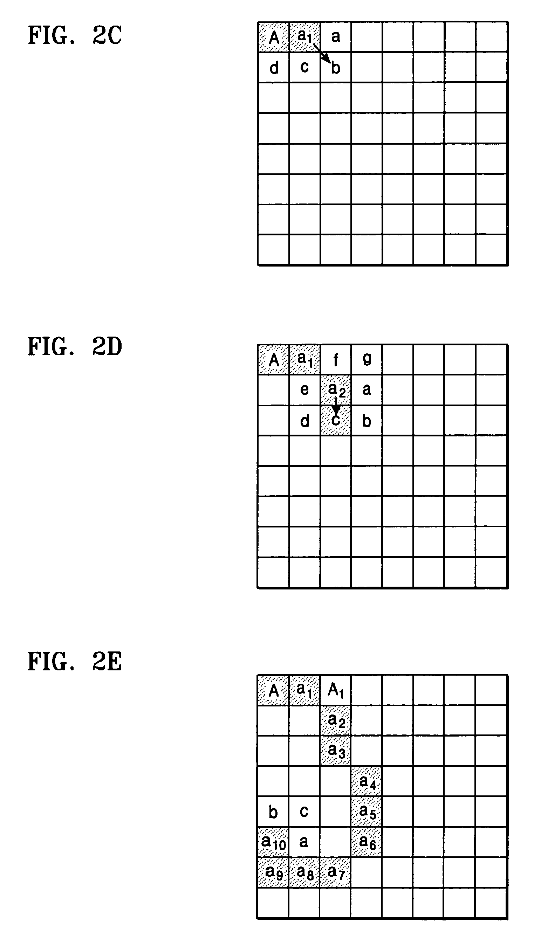

FIGS. 2B through 2C illustrate steps in a process of searching for pixels to be included in a current one-dimensional code when the pixel A is selected as the start position according to an embodiment of the present invention. Referring to FIG. 2B, pixel a having a luminance value closest to that of the pixel A is selected from pixels a, b, and c adjacent to the pixel A. For example, if the luminance values of the pixels A, a, b, and c are 30, 29, 25, and 28, respectively, the pixel a having the closest luminance value to that of the pixel A is selected and included in the current one-dimensional code. Similarly, the pixels b and c are selected as illustrated in FIGS. 2C and 2D, respectively.

FIG. 2E illustrates a process step of determining a next successive pixel when a current pixel is a10 and its adjacent pixels are a, b, and c according to an embodiment of the present invention. If the luminance values of the pixels a10, a, b, and c are 32, 37, 38, and 38, respectively, and a predetermined threshold value that determines a range of difference between the current pixel a10 and a next successive pixel is 3, a search for a current one-dimensional code is terminated since the difference between none of the luminance values of the adjacent pixels a, b and c and that of the current pixel a10 is less than or equal to the threshold value 3. A threshold value that determines a range of difference between a current pixel and a next successive pixel may be chosen according to an input image.

After the search for the current one-dimensional code is terminated, a search for pixels to be included in a next one-dimensional code starts. There may be more than one start position as illustrated in FIG. 2A. The start position may be determined based on a predetermined standard. For example, of the remaining pixels, a pixel A1 in the top row may be determined as the start position as illustrated in FIG. 2E.

The luminance values of the pixels A, a1, a2, a3, a4, a5, a6, a7, a8, a9, and a10 included in the one-dimensional code illustrated in FIG. 2E are, for example, 30, 29, 29, 30, 31, 31, 29, 30, 30, 31, and 32, respectively.

FIG. 3 illustrates a step in a process of selecting a next successive pixel when two or more adjacent pixels, that is, pixels b and c, have an identical luminance value or luminance values within a predetermined range according to an embodiment of the present invention. In this case, a pixel selected according to a predetermined standard may be determined as a next successive pixel. For example, referring to FIG. 5, when position information of each pixel is stored through chain encoding, a pixel value that makes the smallest data amount of position information may be selected as the next successive pixel. In other words, since position information of a current pixel a2 with respect to a previous pixel a1 is '1,' the pixel b whose position information with respect to the current pixel a2 is '1' is selected as the next successive pixel.

FIG. 4 is an 8x8 block for illustrating an encoding method when the number of pixels remaining after a plurality of pixels to be included in a one-dimensional code are searched for is less than a predetermined threshold value according to an embodiment of the present invention. For example, if the predetermined threshold value is 10 and the number of remaining pixels is 8, the remaining pixels are reconfigured in a predetermined scanning order after the search for pixels to be included in the one-dimensional code is terminated so as to generate a separate one-dimensional code. In this case, when a decoder reconfigures an image, luminance values of the remaining pixels are arranged in the same scanning order as in the encoder after the one-dimensional codes are reconstructed.

FIG. 5 illustrates position information of pixels included in a one-dimensional code used for a method of encoding according to an embodiment of the present invention. In other words, referring to FIG. 5, directions formed by pixels included in a current one-dimensional code are represented by eight direction vectors, and indices of the eight direction vectors are transmitted to the decoder, so that the decoder can reconfigure an image. The difference between the indices may also be transmitted to the decoder.

In addition, starting point coordinates of a one-dimensional code may be transmitted. In the case of a medium requiring a low transmission rate, horizontal and vertical position values of a starting point may be variable-length-coded and transmitted. Alternatively, only one of the horizontal and vertical position values may be independently variable-length-coded and transmitted, and a difference between the other of the horizontal and vertical position values and the corresponding position value of a subsequent pixel may be variable-length-coded and then transmitted. For example, the position information of the pixels a1, a2, a3, a4, a5, a6, a7, a8, a9, and a10 included in the one-dimensional code illustrated in FIG. 2E are represented by index values 0, 1, 2, 1, 2, 2, 3, 4, 4, and 6, respectively, as illustrated in FIG. 5.

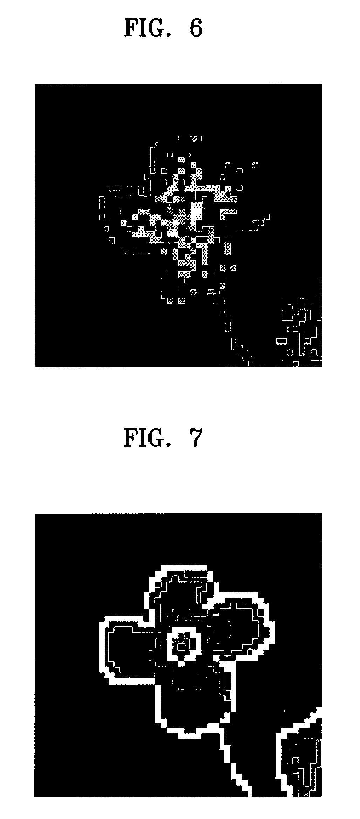

FIGS. 6 and 7 are views of divided images according to an embodiment of the present invention. Specifically, FIG. 6 illustrates an input image to which the encoding method according to the present invention is applied. FIG. 7 illustrates an image divided into a plurality of one-dimensional codes according to an embodiment of the present invention. FIG. 7 illustrates position information of some of the one-dimensional codes of FIG. 6 and presents the one-dimensional codes at different levels of brightness.

As described above, the image division and one-dimensional code information generation unit 120 divides an input image into a plurality of one-dimensional codes, each including pixels connected to one another, creates information regarding pixels included in each of the one-dimensional codes, for example, one-dimensional code information including information regarding pixel characteristics as well as pixel position information, and transmits the one-dimensional code information to the encoding unit 140.

The encoding unit 140 encodes the input image in units of one-dimensional codes based on the received one-dimensional code information. The received one-dimensional code information includes luminance values and position information of pixels included in a corresponding one-dimensional code. The one-dimensional code information may further include information regarding a starting point of the one-dimensional code, a threshold value, and a scanning method.

The encoding unit 140 may start to encode the input image after the image division and one-dimensional code information generation unit 120 finishes dividing the input image and generating one-dimensional codes or may encode one-dimensional codes sequentially input as they are generated. The encoding unit 140 may use a variable length coding method, a context-based arithmetic coding method, a context-based adaptive binary arithmetic coding (CABAC) method, or a context-based adaptive variable length coding (CAVLC) method.

Differential pulse-coded modulation (DPCM) encoding is performed on luminance values of pixels included in each of one-dimensional codes. Since each of the one-dimensional codes into which the input image divided includes pixels having an identical luminance value or luminance values within a predetermined range, encoding efficiency is dramatically enhanced after the DPCM encoding.

In the present embodiment, encoding luminance components has been described. However, the same encoding method may be applied to color components. For the luminance components, the input image may be divided into one-dimensional codes and then encoded in units of one-dimensional codes according to the present invention, and, for color components, the input image may be encoded in units of, for example, macroblocks, according to the prior art.

In the present embodiment, a method of encoding luminance and color values of pixels when the input image is in an YCbCr format has been described. However, when the input image has an RGB format, the encoding method may equally be applied to a value of each color domain.

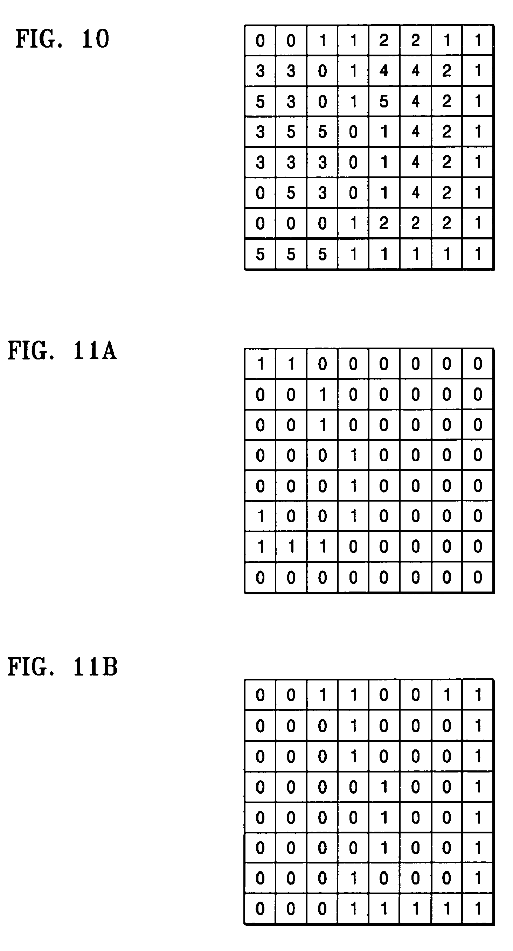

For position information of one-dimensional codes, chain encoding described with reference to FIG. 5 or an encoding method to be described later with reference to FIGS. 10 through 12 is applied.

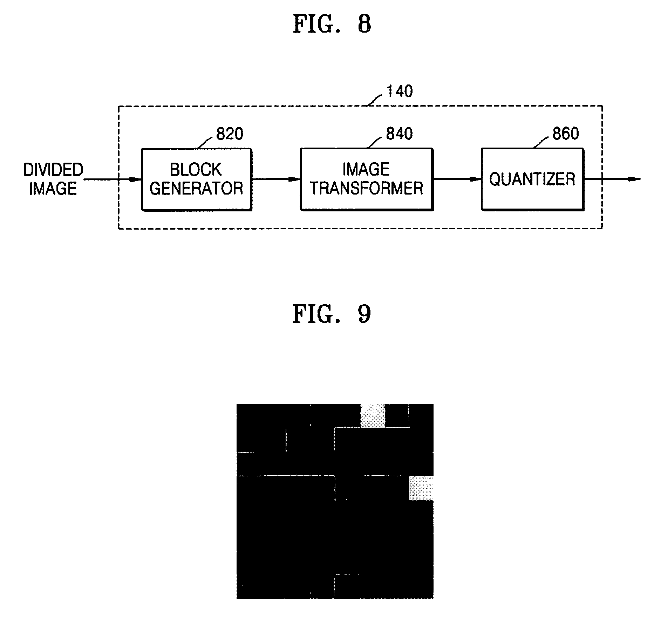

FIG. 8 is a detailed block diagram of the encoding unit 140 illustrated FIG. 1 according to an embodiment of the present invention. Referring to FIG. 8, the encoding unit 140 includes a block generator 820, an image transformer 840, and a quantizer 860. The block generator 820 reconfigures the one-dimensional code information received from the image division and one-dimensional code information generation unit 120 in units of, for example, 8x8 blocks.

FIG. 9 is a block representation of luminance values included in one of the one-dimensional codes illustrated in FIG. 7 according to an embodiment of the present invention.

The image transformer 840 and the quantizer 860 respectively perform image transformation and quantization in units of blocks. Since the blocks are composed of pixels included in each identical one-dimensional code, that is, pixels having similar characteristics, high-frequency components excluding a DC component become close to zero. Consequently, encoding efficiency is significantly enhanced after image transformation and quantization. Since image transformation and quantization are performed using the same method as that used by a general encoding apparatus, a detailed description thereof is omitted for the sake of simplicity.

FIG. 10 illustrates a code table used for encoding position information of pixels included in each one-dimensional code according to another embodiment of the present invention. Referring to FIG. 10, an 8x8 block is divided into a plurality of one-dimensional codes, each including a plurality of pixels. For the sake of convenience, in the present embodiment, the method of encoding the position information of pixels included in each one-dimensional code will be described using a block as an example. However, the encoding method may equally be applied to a macroblock or a picture.

The pixels found in FIG. 2E, which collectively form a one-dimensional code, are indicated by '0' in FIG. 10. In the present embodiment, the block is divided into six one-dimensional codes. Pixels included in each of the six one-dimensional codes have values of 0, 1, 2, 3, 4, and 5, each indicating a one-dimensional code to which pixels in a position corresponding to each pixel value belong. For example, pixels indicated by '00' in the top left corner of the block belong to a first one-dimensional code, and pixels indicated by '11' next to '00' belong to a second one-dimensional code.

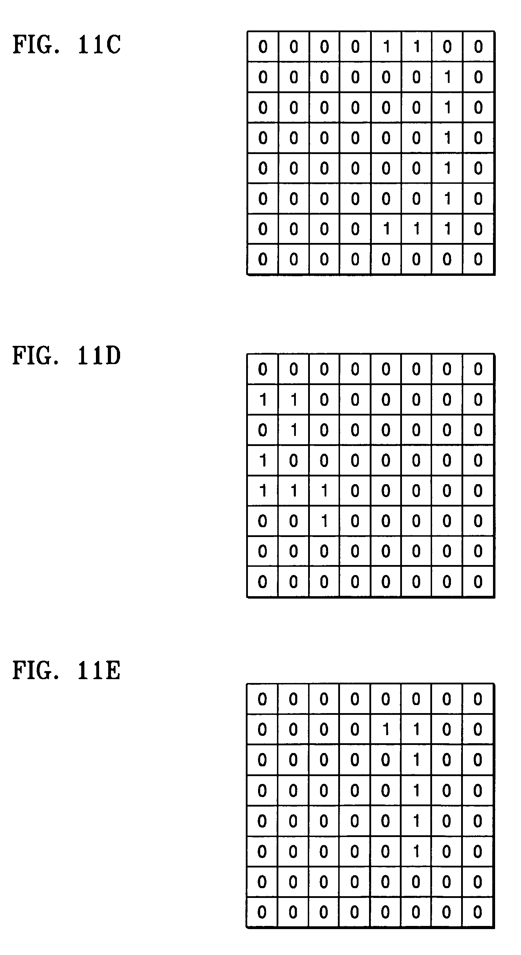

FIGS. 11A through 11F illustrate identification values of pixels indicating which one-dimensional code each pixel belongs to and that are reconfigured per code plane based on the code table of FIG. 10 according to an embodiment of the present invention. Specifically, FIG. 11A illustrates a code 0 plane in which pixels included in the first one-dimensional code of the code table of FIG. 10 are indicated by 1 and the remaining pixels are indicated by 0.

FIG. 11B illustrates a code 1 plane in which pixels included in the second one-dimensional code of the code table of FIG. 10 are indicated by 1 and the remaining pixels are indicated by 0. FIGS. 11C through 11F illustrate code 2-5 planes in which pixels included in the third through sixth one-dimensional codes of the code table of FIG. 10 are indicated by 1 and the remaining pixels are indicated by 0.

As described above, when the code table of FIG. 10 is divided into code planes as illustrated in FIGS. 11A through 11F, the length of 0-run becomes longer.

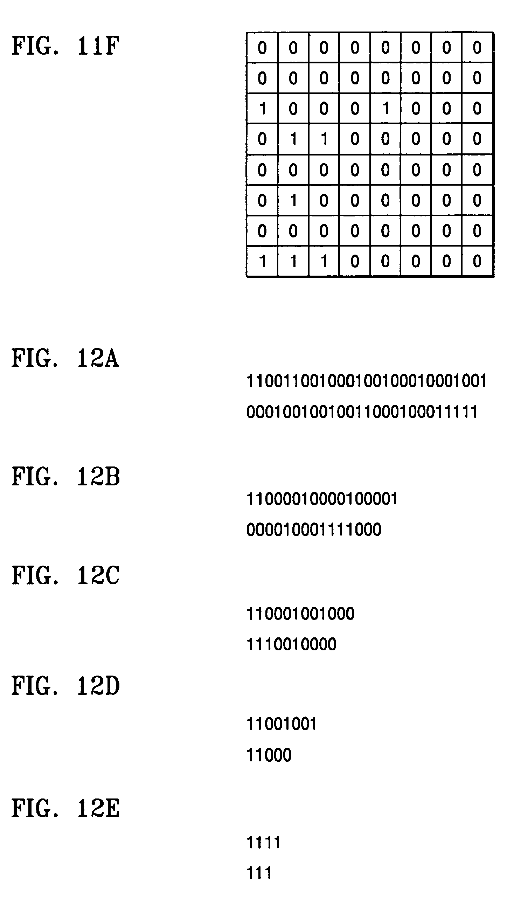

FIGS. 12 A through 12E illustrate code planes for illustrating a method of encoding one-dimensional code information according to an embodiment of the present invention. FIGS. 12A through 12E illustrate code planes obtained after the 0-run in each of the code planes illustrated in FIGS. 11A through 11F is shortened using a code plane reduction scheme according to the present invention.

FIG. 12A illustrates the code 1 plane transformed after '0' corresponding to the pixels indicated by 1 in the code 0 plane of FIG. 11A is removed from the code 1 plane of FIG. 11B. Referring to FIG. 12A, the original code 1 plane composed of 32 bits of '00110011000100010001000100001001' in the top half of the code table of FIG. 11B is transformed into the code 1 plane composed of 27 bits of '110011001000100100010001001' after '0' in the 1^{st}, 2^{nd}, 11^{th}, 19^{th}, and 28^{th} pixels, which are indicated by 1 in the code 0 plane of FIG. 11A, is removed. The transformed code 1 plane has a reduced number of bits and a longer run, compared with the original code 1 plane.

FIG. 12B illustrates the code 2 plane transformed after '0' corresponding to the pixels indicated by 1 in the code 0 plane of FIG. 11A and the code 1 plane of FIG. 11B is removed from the code 2 plane of FIG. 11B. Referring to FIG. 12B, the original code 2 plane composed of 32 bits of '00001100000000100000001000000010' in the top half of the code table of FIG. 11C is transformed into the code 2 plane composed of 17 bits of '11000010000100001' after '0' in the 1^{st}, 2^{nd}, 3^{rd}, 4^{th}, 7^{th}, 8^{th}, 11^{th}, 12^{th}, 16^{th}, 19^{th}, 20^{th}, 24^{th}, 28^{th}, 29^{th}, and 32^{nd} pixels, which are indicated by 1 in the code 0 plane and the code 1 plane, is removed. The transformed code 2 plane has a reduced number of bits and a shorter run, compared with the original code 2 plane.

FIG. 12C illustrates the code 3 plane transformed after '0' corresponding to the pixels indicated by 1 in the code 0 plane of FIG. 11 A, the code 1 plane of FIG. 11B, and the code 2 plane of FIG. 11C is removed from the code 3 plane of FIG. 11D. Referring to FIG. 12C, the original code 3 plane composed of 32 bits of '00000000110000000100000010000000' in the top half of the code table of FIG. 11D is transformed into the code 3 plane composed of 12 bits of '110001001000' after '0' in the 1^{st}, 2^{nd}, 3^{rd}, 4^{th}, 5^{th}, 6^{th}, 7^{th}, 8^{th}, 11^{th}, 12^{th}, 15^{th}, 16^{th}, 19^{th}, 20^{th}, 23^{rd}, 24^{th}, 28^{th}, 29^{th}, 31^{st}, and 32^{nd} pixels, which are indicated by 1 in the code 0-2 planes, is removed. The transformed code 3 plane has a reduced number of bits and a shorter run, compared with the original code 3 plane.

FIG. 12D illustrates the code 4 plane transformed after '0' corresponding to the pixels indicated by 1 in the code 0 plane of FIG. 11A, the code 1 plane of FIG. 11B, the code 2 plane of FIG. 11C, and the code 3 plane of FIG. 11D is removed from the code 4 plane of FIG. 11D. Referring to FIG. 12D, the original code 4 plane composed of 32 bits of '00000000000011000000010000000100' in the top half of the code table of FIG. 11E is transformed into the code 4 plane composed of 8 bits of '11001001' after '0' in the 1^{st}, 2^{nd}, 3^{rd}, 4^{th}, 5^{th}, 6^{th}, 7^{th}, 8^{th}, 9^{th}, 10^{th}, 11^{th}, 12^{th}, 15^{th}, 16^{th}, 18^{th}, 19^{th}, 20^{th}, 23^{rd}, 24^{th}, 25^{th}, 28^{th}, 29^{th}, 31^{st}, and 32^{nd} pixels, which are indicated by 1 in the code 0-3 planes, is removed. The transformed code 4 plane has a reduced number of bits and a shorter run, compared with the original code 4 plane.

FIG. 12E illustrates the code 5 plane transformed after '0' corresponding to the pixels indicated by 1 in the code 0 plane of FIG. 11A, the code 1 plane of FIG. 11B, the code 2 plane of FIG. 11C, the code 3 plane of FIG. 11D, and the code 4 plane of FIG. E is removed from the code 5 plane of FIG. 11F. Referring to FIG. 12E, the original code 5 plane composed of 32 bits of '00000000000000001000100001100000' in the top half of the code table of FIG. 11F is transformed into the code 5 plane composed of 4 bits of '1111' after '0' in the 1^{st}, 2^{nd}, 3^{rd}, 4^{th}, 5^{th}, 6^{th}, 7^{th}, 8^{th}, 9^{th}, 10^{th}, 11^{th}, 12^{th}, 13^{th}, 14^{th}, 15^{th}, 16^{th}, 18^{th}, 19^{th}, 20^{th}, 22^{nd}, 23^{rd}, 24^{th}, 25^{th}, 28^{th}, 29^{th}, 30^{th}, 31^{st}, and 32^{nd} pixels, which are indicated by 1 in the code 0-4 planes, is removed. The transformed code 5 plane has a reduced number of bits and a shorter run, compared with the original code 5 plane. Since the values of all of the pixels in the transformed code 5 plane are 1, encoding is not required.

In the present embodiment, the original code 0 plane and the transformed code 1-5 planes having a shorter 0-run may be run-length-encoded and then transmitted to reduce the amount of data to be transmitted. It is also possible to run-length-encode the original code planes and transmit the run-length-encoded original code planes.

The decoder sequentially reconstructs the transformed code 1-5 planes of FIGS. 12A through 12E to generate the original code 1-5 planes of FIGS. 11B through 11F. Furthermore, the decoder reconstructs the one-dimensional code table of FIG. 10 based on the reconstructed code 1-5 planes and arranges the characteristic values, for example, luminance values, of the pixels based on the reconstructed one-dimensional code table of FIG. 10.

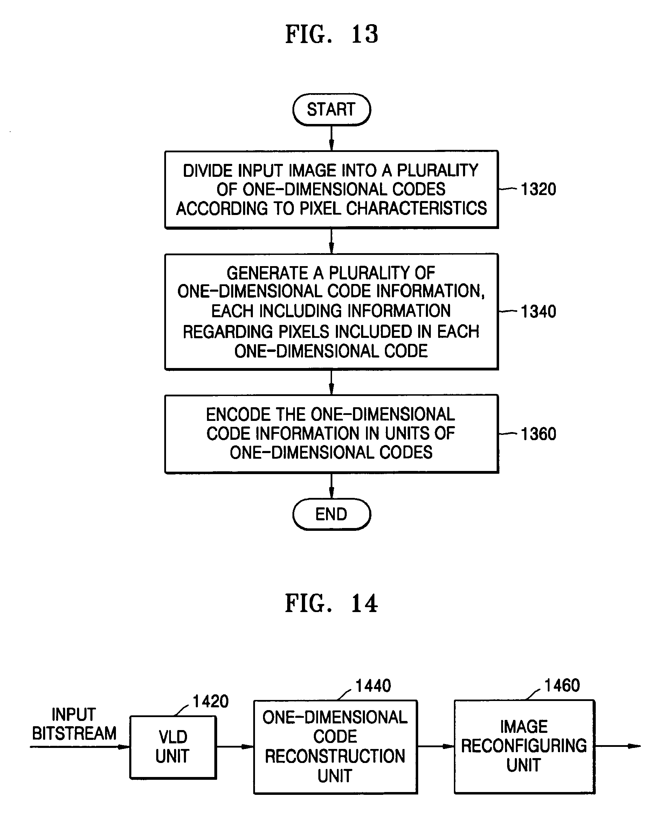

FIG. 13 is a flowchart illustrating an encoding method used by the image encoding apparatus of FIG. 1 according to an embodiment of the present invention. Referring to FIG. 13, in operation 1320, an input image is divided into a plurality of one-dimensional codes of a predetermined size, for example, a picture or a macroblock, each one-dimensional code including a plurality of connected one-dimensional pixels, according to pixel characteristics. A plurality of one-dimensional code information, each containing information regarding pixels included in each of the one-dimensional codes, is generated and transmitted to the encoding unit 140 in operation 1340.

In operation 1360, the input image is encoded in units of one-dimensional codes based on the received one-dimensional code information. The received one-dimensional code information includes luminance values and position information of pixels included in a corresponding one-dimensional code.

FIG. 14 is a block diagram of a decoding apparatus according to an embodiment of the present invention. Referring to FIG. 14, the decoding apparatus includes a variable-length-decoding (VLD) unit 1420, a one-dimensional code reconstruction unit 1440, and an image reconfiguring unit 1460.

The VLD unit 1420 variable-length-decodes an input bitstream, that is, image data divided into a plurality of one-dimensional codes and then encoded, and decodes characteristic values, such as luminance values, and position information, such as chain codes, of pixels included in the bitstream. In the present embodiment, the input image data is variable-length-coded. However, if the input image data is encoded using the context-based arithmetic coding method, the CABAC method or the CAVLC method, a corresponding decoding method may be employed.

The one-dimensional code reconstruction unit 1440 decodes the one-dimensional code information that includes the characteristic values and position information of pixels decoded by the VLD unit 1420. For example, when the characteristic values of the pixels are DPCM-encoded, the one-dimensional code reconstruction unit 1440 DPCM-decodes a luminance value of each of the pixels included in each one-dimensional code. That is, the one-dimensional code reconstruction unit 1440 adds the variable-length-coded difference to the luminance value of a previous pixel and decodes the luminance value of a current pixel to calculate the luminance value of each of the pixels included in each one-dimensional code.

Position information, if encoded using a chain code encoding method, is decoded using a chain code decoding method. If position information is encoded using a code plane encoding method described with reference to FIGS. 10 through 12A-E, the position information is decoded using a code plane decoding method that corresponds to a code plane encoding method used.

The image reconfiguring unit 1460 reconfigures an image using the characteristic value and position information of each of pixels included in each one-dimensional code obtained from the one-dimensional code reconstruction unit 1440. In other words, the image reconfiguring unit 1460 reconfigures the image by displaying the characteristic value of each pixel at a position specified by the position information.

If an input is reconfigured into a plurality of blocks, transformed and quantized, and then variable-length-coded, the decoding apparatus may further include an inverse transformation and quantization unit.

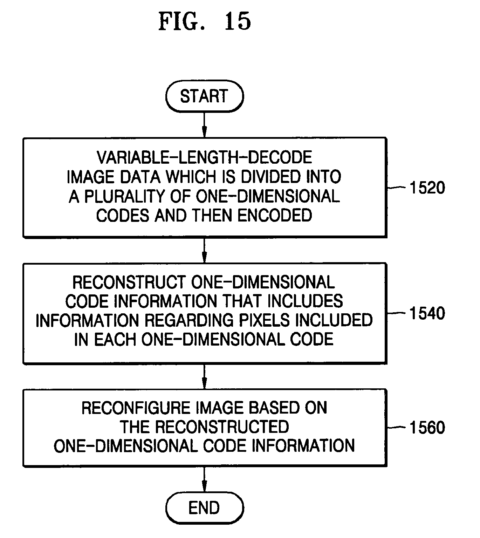

FIG. 15 is a flowchart illustrating a decoding method used by the decoding apparatus of FIG. 14 according to an embodiment of the present invention.

Referring to FIG. 15, in operation 1520, an input bitstream, that is, image data divided into a plurality of one-dimensional codes and then encoded, is variable-length-decoded, and characteristic values, such as luminance values, and position information, such as chain codes, of pixels included in the bitstream are decoded. In the present embodiment, the input image data is variable-length-coded. However, if the input image data is encoded using the context-based arithmetic coding method, the CABAC method or the CAVLC method, a corresponding decoding method may be employed.

The one-dimensional code information that includes the characteristic values and position information of pixels decoded in operation 1520 is decoded in operation 1540.

In operation 1560, an image is reconfigured using the characteristic value and position information of each of pixels included in each one-dimensional code obtained in operation 1540. In other words, the image is reconfigured by displaying the characteristic value of each pixel at a position specified by the position information.

Operations 1540 and 1560 may be performed in units of one-dimensional codes or images. If pixels included in the last reconfigured one-dimensional code are those illustrated in FIG. 4, the pixels are filled into the remaining pixels in the same scanning order as in the encoding operation.

If an input is reconfigured into a plurality of blocks, transformed and quantized, and then variable-length-coded, the decoding method may further include inverse transformation and quantization (not shown).

As described above, according to preferred embodiments of the present invention, an input image is divided into a plurality of one-dimensional images, each including a plurality of pixels having characteristic values within a predetermined range, and encoded accordingly. Thus, compression efficiency can be enhanced and a blocking phenomenon can be reduced.

Furthermore, if an image can easily be divided into one-dimensional images, a compression rate can be significantly improved and the blocking phenomenon can be removed.

The present invention can also be implemented as computer-readable code on a computer-readable recording medium. Code and code segments for accomplishing the present invention can be easily construed by programmers skilled in the art to which the present invention pertains. Also, the computer-readable recording medium is any data storage device that can store data which can be thereafter read by a computer system. Examples of the computer-readable recording medium include magnetic tapes, optical data storage devices, and carrier waves.

While the present invention has been particularly shown and described with reference to exemplary embodiments thereof, it will be understood by those of ordinary skill in the art that various changes in form and details may be made therein without departing from the spirit and scope of the present invention as defined by the following.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image encoding method comprising:
dividing an input image into a plurality of one-dimensional codes, a one-dimensional code of the plurality of one-dimensional codes comprising at least one pixel selected according to pixel characteristics;
creating a plurality of one-dimensional code information, a one-dimensional code information of the plurality of one-dimensional code information comprising information regarding the at least one pixel; and
encoding the plurality of one-dimensional code information in units of one-dimensional codes.

2. The method of claim 1, wherein the at least one pixel included in the one-dimensional code has a characteristic value within a predetermined range and is one-dimensionally connected to other pixels in the one-dimensional code.

3. The method of claim 1 or claim 2, wherein the one-dimensional code information comprises position information of the at least one pixel and characteristic value of the at least one pixel, and the encoding the plurality of one-dimensional code information comprises reconfiguring the characteristic value of the one-dimensional code information into a block of a predetermined size and performing at least one of image transformation and quantization on the block.

4. The method of any preceding claim , wherein the dividing the input image comprises dividing the input image into pluralities of one-dimensional codes according to a plurality of modes and selecting the plurality of one-dimensional codes from the pluralities of one-dimensional codes according to an optimal efficiency, wherein the plurality of modes provides for different ranges of characteristic values of the at least one pixel or different starting points for searching for the at least one pixel.

5. The method of claim 4, wherein the characteristic value of the at least one pixel is a luminance value or a color value if the input image has an YCbCr format and is a color domain value if the input image has an RGB format.

6. The method of claim 1 or claim 2, wherein the one-dimensional code information comprises a characteristic value of the at least one pixel, and encoding the plurality of one-dimensional code information comprises calculating a difference between the characteristic value of the at least one pixel and a characteristic value of another pixel and encoding the difference.

7. The method of claim 1 or claim 2, wherein the one-dimensional code information comprises a position information of the at least one pixel, and the encoding the plurality of one-dimensional code information comprises encoding an index indicating a direction of the at least one pixel.

8. The method of claim 1 or claim 2, wherein the one-dimensional code information comprises a position information of the at least one pixel, and encoding the plurality of one-dimensional code information comprises generating a plurality of code planes for the plurality of one-dimensional codes and encoding the plurality of code planes.

9. The method of claim 8, wherein the a code plane of the plurality of code planes comprises information indicating whether the at least one pixel belongs to a current code plane.

10. The method of claim 9, wherein the plurality of code planes is generated by setting one-dimensional code information corresponding to pixels that belong to the current code plane to one and setting one-dimensional code information corresponding to pixels that do not belong to the current code plane to zero.

11. The method of claim 9, wherein the plurality of code planes are arranged in a predetermined order, information regarding a next code plane is modified based on one-dimensional code information of the current code plane to generate modified information in a modification, and the modified information regarding the next code plane is encoded.

12. The method of claim 11, wherein the modification comprises removing information regarding pixels that belong to the current code plane from the information regarding the next code plane based on the one-dimensional code information of the current code plane.

13. The method of claim 1, wherein the dividing the input image comprises searching for the at least one pixel, wherein the searching for the at least one pixel comprises selecting a pixel having a characteristic value closest to a characteristic value of a current pixel from pixels adjacent to the current pixel and storing the characteristic value and position information of the selected pixel.

14. The method of claim 13, wherein a generation of a current one-dimensional code is terminated when a difference between the characteristic value of the selected pixel and the characteristic value of the current pixel is greater than a predetermined threshold value.

15. The method of claim 14, wherein the predetermined threshold value is chosen according to characteristics of the input image.

16. The method of claim 1, wherein the dividing the input image comprises searching for the at least one pixel, wherein the searching for the at least one pixel comprises selecting one of a plurality of pixels adjacent to a current pixel, a difference between a characteristic value of the selected one of the plurality of pixels adjacent to the current pixel and a characteristic value of the current pixel falling within a predetermined range to form an optimum one-dimensional code.

17. The method of claim 1, wherein the dividing the input image comprises configuring remaining pixels into another one-dimensional code when a number of the remaining pixels is less than a predetermined value and arranging the remaining pixels in a predetermined scanning order.

18. The method of claim 1, wherein the encoding the plurality of one-dimensional code information is performed using one of a variable length coding (VLC), a context-based arithmetic coding, a context based adaptive binary arithmetic coding (CABAC), and a context-based adaptive variable length coding (CAVLC).

19. An image encoding apparatus comprising:
an image division and one-dimensional code information generation unit (120) which divides an input image into a plurality of one-dimensional codes, a one-dimensional code of the plurality of one-dimensional codes comprising at least one pixel selected according to pixel characteristics, and creates a plurality of one-dimensional code information, a one-dimensional code information of the plurality of one-dimensional code information comprising information regarding the at least one pixel; and
an encoding unit (140) which encodes the plurality of one-dimensional code information in units of one-dimensional codes.

20. The apparatus of claim 19, wherein the at least one pixel included in the one-dimensional code has a characteristic value within a predetermined range and is one-dimensionally connected to other pixels in the one-dimensional code.

21. The apparatus of claim 19 or claim 20, wherein the one-dimensional code information comprises position information of the at least one pixel and characteristic value of the at least one pixel, and the encoding unit (140) comprises a block reconfiguring unit (820) which reconfigures the characteristic value of the one-dimensional code information into a block of a predetermined size and an image transformation and quantization unit (120) which performs at least one of image transformation and quantization on the block.

22. The apparatus of claim 19 or claim 20, wherein the one-dimensional code information comprises the characteristic information of the at least one pixel included in the one-dimensional code, and the encoding unit (140) calculates a difference between the characteristic value of the at least one pixel and a characteristic value of another pixel and encodes the difference.

23. The apparatus of claim 19 or claim 20, wherein the one-dimensional code information comprises a position information of the at least one pixel, and the encoding unit (140) encodes an index indicating a direction of the at least one pixel.

24. The apparatus of claim 19 or claim 20, wherein the one-dimensional code information comprises a position information of the at least one pixel, and the encoding unit (140) generates a plurality of code planes for the plurality of one-dimensional codes and encoding the plurality of code planes.

25. The apparatus of claim 24, wherein a code plane of the plurality of code planes comprises information indicating whether the at least one pixel belongs to a current code plane.

26. The apparatus of claim 25, wherein the plurality of code planes is generated by setting one-dimensional code information corresponding to pixels that belong to the current code plane to one and setting one-dimensional code information corresponding to pixels that do not belong to the current code plane to zero.

27. The apparatus of claim 25, wherein the plurality of code planes are arranged in a predetermined order, information regarding a next code plane is modified based on one-dimensional code information of the current code plane to generate modified information in a modification, and the modified information regarding the next code plane is encoded.

28. The apparatus of claim 27, wherein the modification comprises removing information regarding pixels that belong to the current code plane from the information regarding the next code plane based on the one-dimensional code information of the current code plane.

29. The apparatus of claim 19 or claim 20, wherein the image division and one-dimensional code information generation unit (120) configures remaining pixels into another one-dimensional code when a number of the remaining pixels is less than a predetermined value and arranges the remaining pixels in a predetermined scanning order.

30. The apparatus of claim 19 or claim 20, wherein the encoding unit (140) performs one of a variable length coding, a context-based arithmetic coding, a context-based adaptive binary arithmetic coding, and a context-based adaptive variable length coding.

31. An image decoding method comprising:
variable-length-decoding image data which has been divided into a plurality of one-dimensional codes according to pixel characteristics and then encoded;
reconstructing a plurality of one-dimensional code information which includes a one-dimensional code information regarding at least one pixel included a one-dimensional code, based on the variable-length-decoded image data; and
reconfiguring an image based on the reconstructed plurality of one-dimensional code information.

32. The method of claim 31 or claim 32, wherein the one-dimensional code comprises luminance values within a predetermined range and one-dimensionally connected pixels.

33. The method of claim 31, wherein the reconstructing the plurality of one-dimensional code information comprises performing inverse quantization and inverse transformation on a block including the one-dimensional code, and generating the one-dimensional code.

34. The method of claim 31 or claim 32, wherein the one-dimensional code information comprises position information of the at least one pixel and characteristic information of the at least one pixel, and the reconfiguring the image is performed based on the position information and the characteristic information of the at least one pixel included in the one-dimensional code.

35. The method of claim 34, wherein the characteristic information of the at least one pixel is a luminance value or a color value if the image has an YcbCr format and is a color domain value if the image has an RGB format.

36. The method of claim 31 or claim 32, wherein, in the variable-length-decoding of the image data, image data encoded using one of a variable length coding, a context-based arithmetic coding method, a context-based adaptive binary arithmetic coding, and a context-based adaptive variable length coding is variable-length-decoded.

37. An image decoding apparatus comprising:
a variable-length-decoding (VLD) unit (1420) which variable-length-decodes image data which has been divided into a plurality of one-dimensional codes according to pixel characteristics and then encoded;
a one-dimensional code reconstruction unit (1440) which reconstructs a plurality of one-dimensional code information including a one-dimensional code information regarding at least one pixel included in a one-dimensional code, based on the variable-length-decoded image data; and
an image reconfiguring unit (1460) which reconfigures an image based on the reconstructed plurality of one-dimensional code information.

38. The apparatus of claim 37, wherein the one-dimensional code comprises luminance values within a predetermined range and one-dimensionally connected pixels.

39. The apparatus of claim 37 or claim 38, wherein the one-dimensional code information comprises position information and characteristic information of the at least one pixel.

40. The apparatus of claim 39, wherein the characteristic information of the at least one pixel is a luminance value or a color value if the image has an YcbCr format and is a color domain value if the image has an RGB format.

41. The apparatus of claim 37 or claim 38, wherein the VLD unit (1420) variable-length-decodes image data encoded using one of a variable length coding, a context-based arithmetic coding, a context-based adaptive binary arithmetic coding, and a context-based adaptive variable length coding is variable-length-decoded.

42. A computer-readable recording medium on which a program for executing an image encoding method is recorded, the method comprising:
dividing an input image into a plurality of one-dimensional codes, a one-dimensional code information of the plurality of one-dimensional codes comprising at least one pixel selected according to pixel characteristics;
creating a plurality of one-dimensional code information, a one dimensional code information of the plurality of one-dimensional code information comprising information regarding the at least one pixel; and
encoding the plurality of one-dimensional code information in units of one-dimensional codes.

43. The medium of claim 42, wherein the at least one pixel included in the one-dimensional code has a characteristic value within a predetermined range and is one-dimensionally connected to another pixel.

44. A computer-readable recording medium on which a program for executing an image decoding method is recorded, the method comprising:
variable-length-decoding image data which as been divided into a plurality of one-dimensional codes according to pixel characteristics and then encoded;
reconstructing a plurality of one-dimensional code information which includes a one-dimensional code information regarding at least one pixel included a one-dimensional code, based on the variable-length-decoded image data; and
reconfiguring an image based on the reconstructed plurality of one-dimensional code information.

45. The medium of claim 44, wherein the one-dimensional code comprises luminance values within a predetermined range and one-dimensionally connected pixels.
